# EUROPEAN PATENT APPLICATION

(11) **EP 0 634 748 A2**
(43) Date of publication of application: **18.01.1995**
(21) Application number: 94305107.8
(22) Date of filing: 13.07.1994
(51) Int. Cl.: G11B 23/03, G11B 17/04

(54) **Disc cartridge apparatus**

(30) Priority: 13.07.1993 JP 173439/93
(71) Applicant: KABUSHIKI KAISHA TOSHIBA, Kawasaki-shi, Kanagawa-ken 210 (JP)
(72) Inventor: Imaoka, Yoshiharu, c/o Intellectual Property Div., Minato-ku, Tokyo (JP); Tomita, Seiji, c/o Intellectual Property Div., Minato-ku, Tokyo (JP); Kurafuji, Takamasa, c/o Intellectual Property Div., Minato-ku, Tokyo (JP)
(74) Representative: O'Connell, David Christopher

(57) **Abstract**

A disc cartridge apparatus has a cartridge main body wherein a disc having an information bearing surface is rotatably accommodated, and which is provided with an opening confronted by an optical pickup for recording and/or reproducing an information signal to/from the disc, a sliding shutter slidably installed in the cartridge main body between a position where it covers the opening of the cartridge main body and another position where it uncovers the opening and a releasable locking mechanism having a portion to be engaged defined on the sliding shutter and an engaging portion defined on the cartridge main body for locating the sliding shutter to the position for covering the opening.

## Description

The present invention generally relates to a disc cartridge apparatus, and more particularly, to a disc cartridge apparatus which rotatably accommodates a circular disc such as an optical recording disc, a magneto-optic recording disc and a magnetic disc, having a sliding shutter for covering/uncovering an opening defined for recording or reproducing signals therethrough to or from the disc, and to such a disc cartridge apparatus wherein the sliding shutter is slidably installed in the cartridge between a position where it covers the opening and positions spaced in one direction and another direction from the covering position, where it uncovers the opening.

### BACKGROUND OF THE INVENTION

Conventionally a disc cartridge rotatably accommodates a circular disc such as an optical recording disc, a magneto-optic recording disc and a magnetic disc in a cartridge main body comprising an upper case-half and a lower case-half which are butt-joined with each other. In the cartridge main body accommodating the circular disc mentioned above, an opening confronting an optical pickup for recording and/or reproducing of an information signal is defined in the main body in extending in the radial direction from nearly the center of the disc. The opening also confronts a disc turntable of a disc driving apparatus for rotating the disc with the optical pickup. And on the cartridge main body, a shutter formed by a thin metal plate or an engineering plastics for opening and closing the opening, is slidably installed.

Now, the sliding shutter installed therein is so arranged that the shutter will be located on a position where the opening is covered for protecting the disc when the cartridge main body is not loaded into an information recording reproducing apparatus containing the disc driving apparatus. For the object, a spring which gives the sliding shutter a bias force in the direction toward the covering position is provided in the cartridge main body. And in a cartridge wherein a sliding shutter is arranged to slide in both directions from a central position where it covers the opening to uncover the opening, the cartridge is further provided with a locking mechanism for blocking the sliding motion of the shutter at the covering position. Further when the cartridge is loaded into an information recording reproducing apparatus, the opening must be uncovered by easily and accurately sliding the shutter. Thus a shutter drive mechanism is required such two opposite functions. Though the cartridge must be reduced its thickness, a conventional cartridge had a drawback that a mechanism becomes complicated for satisfying such requirements as well as necessitates a plurality of components.

As described above, the conventional disc cartridge apparatus has a drawback that it is sophisticated in its construction and necessitates a plurality of components as well as it is suffered with a cost problem.

The present invention has an object to remove the drawbacks in the conventional apparatus. That is, the present invention has an object to provide a disc cartridge which is constructed by a relatively small number of components and not sophisticated in its construction and accurately performs a shutter drive operation.

The disc cartridge apparatus according to the first aspect of the invention is characterized by that it is provided with a cartridge main body wherein a disc having an information bearing surface is rotatably accommodated, and which is provided with an opening confronted by an optical pickup for recording and/or reproducing of an information signal to/from the disc, a sliding shutter slidably installed in the cartridge main body between a position where it covers the opening of the cartridge main body and another position where it uncovers the opening, and a releasable locking mechanism having a portion to be engaged defined on the sliding shutter and an engaging portion defined on the cartridge main body for locating the sliding shutter to the position covering the opening.

The disc cartridge apparatus according to the second aspect of the invention is characterized by the it is provided with a cartridge main body wherein a disc having an information bearing surface is rotatably accommodated, and which is provided with an opening confronted by an optical pickup for recording and/or reproducing of an information signal to orfrom the disc, a sliding shutter slidably installed in the cartridge main body between a position where it covers the opening of the cartridge main body and positions spaced in one direction and another direction from the covering position, where it uncovers the opening, a locking mechanism having a first and second portion to be engaged defined on the sliding shutter, a first engaging portion for preventing the slide of the sliding shutter in the first direction in engaged with the first portion to be engaged and a second engaging portion for preventing the slide of of the sliding shutter in the second direction in engaged with the the second portion to be engaged, and a shutter drive member for driving the sliding shutter in the uncovering position by disengaging the portion to be engaged and the engaging portion of the locking mechanism as well as driving the sliding shutter from the uncovering position to the covering position.

The disc cartridge apparatus according to the third aspect of the invention is characterized by that it is provided with a cartridge main body wherein a disc having an information bearing surface is rotatably accommodated, and which is provided with an opening confronted by an optical pickup for recording and/or reproducing of an information signal to or from the disc, a sliding shutter slidably installed in the cartridge main body between a position where it covers the opening of the cartridge main body and another position where it uncovers the opening, a locking mechanism having a portion to be engaged defined on the sliding shutter and an engaging portion defined on the cartridge main body for locating the sliding shutter to the position covering the opening, a shutter drive member for sliding the sliding shutter in the uncovering position by releasing the lock of the locking mechanism as well as sliding the sliding shutter from the uncovering position to the covering position, and a guide member formed in the cartridge main body for guiding the shutter drive member in operation of sliding the sliding shutter to the covering position in engage with the shutter drive member.

The disc cartridge apparatus according to the fourth aspect of the invention is characterized by that it is provided with a cartridge main body wherein a disc having an information bearing surface is rotatably accommodated, and which is provided with an opening confronted by an optical pickup for recording and/or reproducing of an information signal to or from the disc, a sliding shutter having a shutter blade slidably installed in the cartridge main body between a position where it covers the opening of the cartridge main body and another position where it uncovers the opening, a locking mechanism having a portion to be engaged defined on the sliding shutter and an engaging portion defined on the cartridge main body for locating the sliding shutter to the position covering the opening, a shutter blade stopper, having an engaging tab integrally formed on the cartridge main body for slidably supporting the tip end of the shutter blade of the cartridge main body and a slit defined on the cartridge main body in corresponding with the engaging tab so as to be closed by the shutter blade when the sliding shutter covers the opening.

The disc cartridge apparatus according to the fifthe aspect of the invention is characterized by that it is provided with a cartridge main body which rotatably accommodates a disc having information bearing surfaces, provided with openings where an information signal recording/reproducing pickup faces the information bearing surfaces, a sliding shutter which has been mounted to the cartridge main body in the freely sliding state between a position where the openings of the cartridge main body are covered and a position where the openings are uncovered both in the one direction and the opposite direction, a releasable locking mechanism which locates the sliding shutter at the covered position when the shutter is at the position where the openings are covered, and engaging slits which are provided on the sliding shutter and allow a shutter opening/closing member to enter for unlocking the locking mechanism when the shutter is at the covered position and are positioned at the linearly symmetrical positions on the cartridge main body when the sliding shutter is at the covered position.

The disc cartridge apparatus according to the sixth aspect of the invention is characterized by that it is provided with a cartridge main body comprising a first and a second case-halves which are arranged facing each other, accommodating a disc having information bearing surfaces in the rotatable state and are provided with openings where an information signal recording/reproducing pickup faces the information bearing surfaces, a sliding shutter mounted to the cartridge main body in the rotatable state between the position to cover the opening of the cartridge main body and the position to uncover the opening, and a releasable locking mechanism comprising a portion to be engaged provided on the sliding shutter and an engaging portion provided at the first case-half of the cartridge main body and locates the sliding shutter at the covered position when the sliding shutter is at the position where the openings are covered.

The disc cartridge apparatus according to the seventh aspect of the invention is characterized by that it is provided with a cartridge main body comprising a first and a second case-halves which are arranged facing each other, accommodating a disc having information bearing surfaces, provided with openings where an information signal recording/reproducing pickup faces the information bearing surfaces, a sliding shutter which is mounted to the cartridge main body in a freely sliding state between a position where the openings of the cartridge main body are covered and a position where the openings are uncovered, a releasable locking mechanism comprising a portion to be engaged provided on the sliding shutter and an engaging portion provided at the first case-half of the cartridge main body and locates the sliding shutter at the covered position when the sliding shutter is at the position where the openings are covered, a shutter drive member which unlocks the locking mechanism, drives the sliding shutter to the uncovered position and drives the shutter located at the sliding position to the covered position , and a guide member which is formed on the second case-half of the cartridge main body and guides the shutter drive member which is engaged with the sliding shutter until the sliding shutter is located at the covering position when the shutter drive member drives the sliding shutter to perform the drive operation of the sliding shutter.

The disc cartridge apparatus according to the eigth aspect of the invention is characterized by that it is provided with a cartridge main body which rotatably accommodates a disc having information bearing surfaces in the rotatable state and is provided with openings where an information signal recording/reproducing pickup faces the information bearing surfaces, a sliding shutter which has a coupling piece and a pair of shutter pieces provided facing both side edges of this coupling piece and has been mounted to the cartridge main body in the freely sliding state between a position where the openings of the cartridge main body are covered and a position where the openings are uncovered both in the one direction and its opposite direction, a releasable locking mechanism which has engaging slits provided on the sliding shutter and a portion to be engaged which is provided on the cartridge main body and engages with the engaging slits when the sliding shutter is at the position where the openings are covered and locates the sliding shutter at the covering position.

The disc cartridge apparatus according to the ninth aspect of the invention is characterized by that it is provided with a cartridge main body which rotatably accommodates a disc having information bearing surfaces in the rotatable state and is provided with openings for both surfaces of the disc where an information signal recording/reproducing pickup faces the information bearing surfaces, a sliding shutter which has a coupling piece and a pair of shutter pieces provided facing both side edges of this coupling pieces and mounted to the cartridge main body in the freely sliding state between a position where the openings of the cartridge main body are covered and a position where the openings are uncovered in both the one direction and its opposite direction, a releasable locking mechanism which locates the sliding shutter at the covering position when the sliding shutter is at the position where the openings are covered, engaging slits which are provided to the sliding shutter and allow a shutter drive member to enter for unlocking the locking mechanism when the sliding shutter is at the covering position, and are provided at the linearly symmetrical positions of the cartridge main body when the sliding shutter is at the covering position.

The disc cartridge apparatus according to the tenth aspect of the invention is characterized by that it is provided with, a cartridge main body which rotatably accommodates a disc having information bearing surfaces and is provided with openings for both surfaces of the disc, where an information signal recording/reproducing pickup faces the information bearing surfaces, a sliding shutter which has a coupling piece and a pair of shutter pieces provided facing each other at both side edges of the coupling piece and mounted between a position where the openings of the cartridge main body are covered and a position where the openings are uncovered in one direction and its opposite direction, and a releasable locking mechanism comprising a pair of engaging slits provided on the sliding shutter and a pair of spring hooks integrally formed with the cartridge main body and are engaged with the engaging slits for locating the sliding shutter when the sliding shutter is at a position where the openings are covered, and is so formed that it has engaging surfaces facing each other to hold the sliding shutter in the state engaged with the engaging slits.

The disc cartridge apparatus according to the eleventh aspect of the invention is characterized by that it is provided with all the construction in the first aspect of the invention and further provided with supporting protrusions which are integrally formed with the sliding shutter, and wherein the sliding shutter is mounted to the cartridge main body in the slidable state by the supporting protrusions.

The disc cartridge apparatus according to the twelfth eleventh aspect of the invention is characterized by that it is provided with all the construction in the first aspect of the invention and wherein the cartridge main body is comprised of a first and a second case-halves arranged facing each other, and a sliding portion and an engaging portion are provided so that they are engaged by sliding one of the case-halves to the other half horizontally.

The disc cartridge apparatus according to the thirteenth aspect of the invention is characterized by that it is provided with all the construction in the first aspect of the invention invention and wherein the tip of the sliding shutter is formed in a tapered shape which becomes gradually thinner toward the tip and is guided while entering in the groove provided between a guide piece and the cartridge main body.

The disc cartridge apparatus according to the fourteenth aspect of the invention is characterized by that it is provided with all the construction in the first aspect of the invention and wherein the shutter drive member is provided at its tip with two pins which project in the opposite directions each other and one of them is used for disengaging the engaging portion and the other is used for engaging with the guide member and guiding it.

According to the first aspect of the invention, since a disc cartridge apparatus having the sliding shutter which can open and close the opening operates a location locking mechanism for locating the shutter in the covering position by an engagement of an engaging portion integrated on the cartridge main body and a portion to be engaged defined on the sliding shutter, it is possible to easily lock or unlock the shutter in or from the covering position with a simple construction.

According to the second aspect of the invention, since the locking mechanism is comprised of an engaging portion and a portion to be engaged in pair which block slides of the sliding shutter in both direction, it is possible to accurately and easily lock or unlock the location of the sliding shutter.

According to the third aspect of the invention, since the sliding shutter engages with a guide member which is integrally defined on the cartridge main body to move along the guide member when the sliding shutter slides to the covering position or the uncovering position, the slide of the shutter can be accurately carried out. Further since the engagement of the shutter drive member the guide member of the cartridge main body is maintained until the shutter completely reaches the covering position, it is prevented that the cartridge is unloaded from a recording/reproducing apparatus while the shutter is in the middle portion of the covering and uncovering positions (that is, incompletely covering position). According to this, it is possible to solve the problems that a disc surface is damaged or dusts stick on the disc surface during the time that the disc cartridge is not applied.

According to the fourth aspect of the invention, since the tip of the shutter blade of the sliding shutter is comprised to be hold by engagement with an engaging hood and slide, and at the same time a slot formed on the cartridge main body is closed on the shutter blade when the sliding shutter is located on the closed-position it is possible to prevent the dust from entering to the disc surface of the disc cartridge through the slot.

According to the fifth aspect of the invention, the engaging slits of the sliding shutter are provided at the linearly symmetrical positions of the cartridge main body when the sliding shutter slides toward both sides of the openings of the cartridge main body and are at the position to cover the openings, it is not required to change the position of the shutter drive member even when the cartridge is used by reversing its sides upside down.

According to the sixth aspect of the invention, the cartridge main body is comprised of the first and the second case-halves which are arranged to face each other and the engaging portion of the locking mechanism is provided on one of the case-halves, it is possible to obtain a disc cartridge apparatus simple in construction and small in the number of components.

According to the seventh aspect of the invention, the cartridge main body is comprised of the first and the second case-halves which are arranged to face each other, the engaging portion of the locking mechanism is provided on one of the case-halves and the guide member of the shutter drive member is formed on the other case-half, it is possible to obtain a disc cartridge apparatus which is small in the number of components and of which positive operation can be expected.

According to the eigth aspect of the invention, the apparatus is capable of recording/reproducing signals on both surfaces of a disc and the sliding shutter slides toward both sides of the openings of the cartridge main body, it is possible to give the flexibility to the design of the positions of the shutter drive member and the drive directions of the shutter.

According to the ninth aspect of th invention, the apparatus is capable of recording/reproducing on or from both surfaces of a disc and the engaging slits of the sliding shutter are provided at the linearly symmetrical positions on the cartridge main body when the sliding shutter is at the position to cover the openings, it is not needed to change the position of the shutter drive member even when changing the information bearing surface of a disc, and furthermore, it is possible to give the flexibility to the design of the drive directions of the sliding shutter.

According to the tenth aspect of the invention, the locking mechanism is comprised of a pair of the engaging slits provided on the sliding shutter and a pair of the spring hooks integrally formed in the cartridge main body, it is possible to obtain a disc cartridge apparatus which is simple in construction and small in the number of components.

According to the eleventh aspect of the invention, the sliding shutter is mounted to the cartridge main body in the slidable state by the supporting protrusions integrally formed in the sliding shutter, it is possible to obtain a disc cartridge apparatus which is simple in construction, small in the number of components and stably operates.

According to the twelfth aspect of the invention, the cartridge main body is comprised of the first and the second case-halves arranged facing each other and one of the case-halves is joined to the other case-half by sliding it, it is easy to assemble the cartridge.

According to the thirteenth aspect of the invention, the tip of the sliding shutter is in a tapered shape, it is easy to assemble it and the positive sliding motion of the shutter is assured.

According to the fourteenth aspect of the invention, as the guiding pin and the unlocking pin are provided for the shutter drive member, it is possible to promote the operability of the sliding shutter by its simple construction.

Additional objects and advantages of th present invention will be apparent to persons skilled in the art from a study of the following description and the accompanying drawings, which are hereby incorporated in and constitute a part of this specification.

For a better understanding of the present invention and many of the attendant advantages thereof reference will be now made by way of example to th accompanying drawings, wherein:
FIGURE 1 is a perspective view showing the construction of the preferred embodiment of the disc cartridge apparatus according to the present invention;
FIGURE 2 is an exploded view of the disc cartridge shown in FIGURE 1;
FIGURE 3 is a plan view of the disc cartridge in a state where the upper case-half is removed therefrom.
FIGURES 4a to 4c are perspective views showing a loading process of the disc cartridge into the recording/reproducing apparatus; and
FIGURES 5a to 5d are sectional flat views showing the drive action of the sliding shutter in the loading operation.

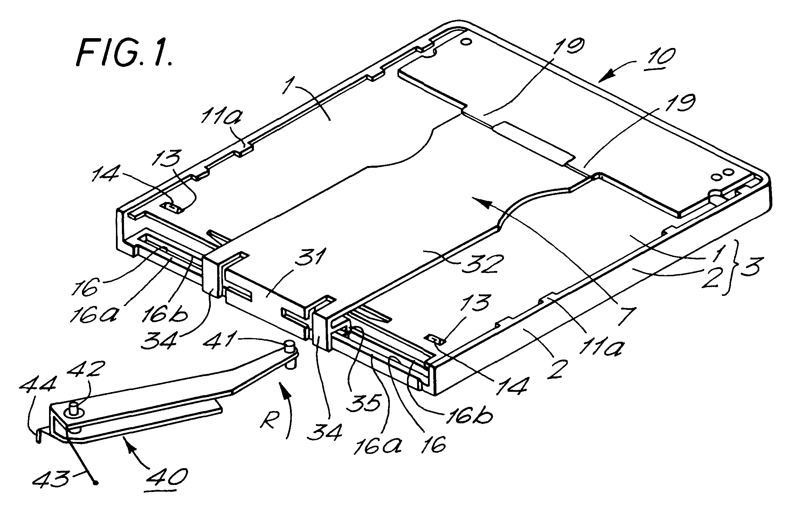

The present invention will be described in detail with reference to the FIGURES 1 through 5. Throughout the drawings, like or equivalent reference nimerals or letters will be used to designate like or equivalent elements for simplicity of explanation.

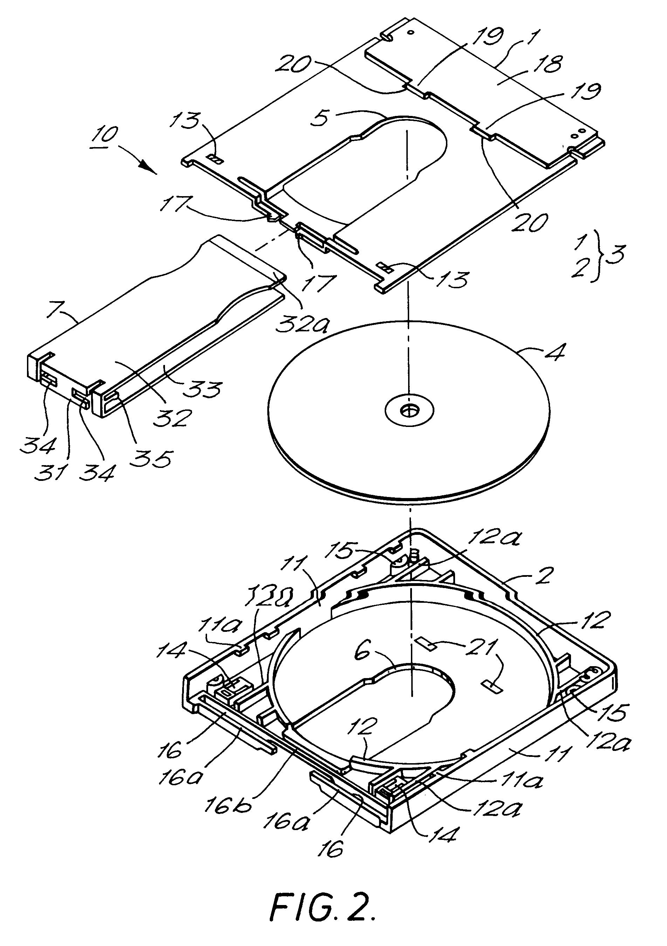

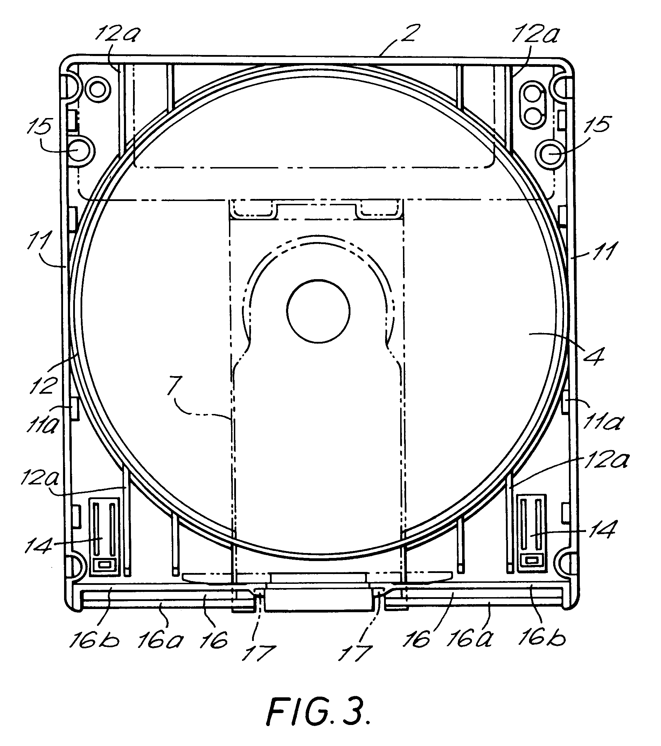

FIGURE 1 is a perspective view showing the construction of the disc cartridge apparatus according to the one embodiment of the present invention. FIGURE 2 is a perspective exploded view of the disc cartridge shown in FIGURE 1. FIGURE 3 is a plan view of the disc cartridge which is removed the upper case-half, constituting a portion of the disc cartridge therefrom.
[0015]

First, a construction of the disc cartridge will be briefly explained in reference to the exploded view shown in FIGURE 2.

In FIGURE 2 the disc cartridge 10 is constructed by a cartridge main body 3, a disc 4 such as an optical disc or a magneto-optic disc rotatably accommodated in the cartridge main body 3 and a sliding shutter 7, which compose principle elements of the disc cartridge 10. The cartridge main body 3 has an upper case-half 1 and a lower case-half 2 which are joined by butt-jointing with each other. The upper case-half 1 and the lower case-half 2 are each formed in nearly a flat square plate shape by plastic moldings. The sliding shutter 7 open and close openings 5, 6 which are defined in the upper case-half and the lower case-half of the cartridge main body 3, respectively, and confronted by an optical pickup for recording and/or reproducing an information signal to/from the disc 4.

To join in the butt-joint manner the upper case-half and the lower case-half for constituting the cartridge main body 3 the upper case-half is inserted into a gap between an upper surface of a support rib 12a extending from an arcuate rib 12 which is defined on the lower case-half and a plurality of engaging hooks 11a integrally molded on the upper end of the side-wall 11 of the lower case-half 2 (herein the engaging hook 11a is formed at the position higher than the support rib 12a by a thickness of the upper case-half 1), According to the construction the upper case-half 1 is defined its vertical position in reference to the lower case-half 2.

Furthermore, the upper case-half 1 and the lower case-half 2 define a cavity enough to rotatably accommodate the disc 4 when these two halves 1, 2 are joined together in the butt-joint manner. The side-wall 11 of the lower case-half 2 then defines the side-wall of the cartridge main body 3 together with the corresponding one of the upper case-half 1.

The openings 5, 6 are defined in the upper and lower walls of the cartridge main body 3, in extending along the radial direction of the disc 4 from the center of the cartridge main body 3, Thus the openings 5, 6 face the disc 4 over the outer end portion through the center portion of the disc 4. Accordingly a disc table of a disc drive device in the recording/reproducing apparatus is able to support the disc 4 through the openings 5, 6. To this end, these openings 5, 6 are each defined in nearly a rectangular shape extending from the center portion to the front end where the shutter is provided, of the upper and the lower case-halves 1, 2 (note here the end portions of the openings 5, 6 facing the center of the disc 4 are defined in a round shape).

Further a plurality of arcuate ribs 12 are formed on the inner surface of the lower case-half 2, with a circle larger than disc 4. These arcuate ribs 12 form a disc position controlling wall for controlling the horizontal position of the disc 4. The arcuate ribs 12 also define a disc housing for housing the disc 4.

And, engaging pieces 14, 14 are provided in an area defined by the side-walls 11 and the arcuate ribs 12 on both sides of the sliding shutter 7 of the lower case-half 2 to be fitted into engaging slits 13, 13 for engaging the upper case-half 1 with the lower case-half 2. Thus the upper case-half 1 is positioned its horizontal position in reference to the lower case-half 2 by the engagements of the engaging pieces 14 with the engaging slits 13.

The front portion of the opening 5 of the upper case-half 1 is cut off for providing a space which allows an engaging pin 41 (see FIGURE 1) mounted on the tip end of the shutter drive member 40 to enter into guide grooves 16, 16 when the disc cartridge comes close to a shutter drive member 40 which will be described later. Around the center portion of the cut-off portion of the upper case-half 1, a pair of spring hooks 17, 17 for locking the sliding shutter 7 in the covering position are integrally formed with the upper case-half 1.

Further, the guide grooves 16, 16 engageable with the engaging pin 41 (see FIGURE 1) on the tip end of the shutter drive member 40 are defined at both sides of the front portion of the lower case-half 2, without the center portion facing the the opening 6. The guide grooves 16, 16 are defined in the lower case-half 2 by a front bank 16a and a rear bank 16b which confront with each other for defining the guide grooves 16, 16. The front bank 16a is cut off at the center, while the rear bank 16b expands thoroughly over the entire length of the front end of the lower case-half 2 without being cut-off its center portion.

Further, in the upper case-half 1 engaging hooks 19, 19 extend from a thick plate 18 on the rear end of the upper case-half 1 in parallel with the main surface of the upper case-half 1 toward the opening 5. These engaging hooks 19, 19 are spaced apart from the main surface (in which the opening 5 is defined) of the upper case-half 1 for allowing a stepdown portion (i.e., thin plate portion) 32a provided on the tip end of the shutter blade 32 of the sliding shutter 7 to be inserted therebetween. Since the engaging hooks 19, 19 are integrally formed with the upper case-half 1 using a cavity-mold die, a pair of slots 20, 20 are defined in the main surface of the upper case-half 1 on positions facing the engaging hooks 19, 19. The slots 20, 20 have widths a little wider than the widths of the engaging hooks 19, 19 by a given amount allowing the cavity-mold die to be extracted in the direction orthogonal to the main surface of the upper case-half 1. Further the slots 20, 20 formed simultaneously with the engaging hooks 19, 19 are designed to be covered at an amount of the width of sliding of the sliding shutter 7 when sliding shutter 7 covers the openings 5, 6 so that, it can prevent the dust from applied on the information bearing surface of the disc 4 through the slots 20, 20 when the openings 5, 6 are covered.

Further another pair of engaging hooks (not shown) for slidably engaging a tip end (also formed in such a stepdown state or a thin plate state) of another shutter blade 33 of the sliding shutter 7 to be inserted and engaged therewith. While the lower case-half 2 is defined slots 21, 21 on positions facing these engaging hooks.

Since the width of the shutter 7 along the sliding direction is made the one thirds of the width in the longitudinal direction of the cartridge main body 3, and the engaging hooks 19, 19 are spaced apart from each other by about the width of the sliding shutter 7, the former slots 20, 20 and the latter slots 21, 21 are covered by the tip end of the sliding shutter 7 when the sliding shutter 7 covers the openings 5 ,6. By the same reason if the sliding shutter 7 slides laterally from the position covering the openings 5, 6 the tip ends of the shutter blades 32, 33 can slide in always engaging with one of the engaging blades 19, 19. Here the number of the engaging blades 19, 19 is not limited to two, but may be three or more. Furthermore the engaging blades 19, 19 can be integrated into one piece which expands over the original ones 19, 19.

The shutter blades 32, 33 of the sliding shutter 7 are oppositely provided in facing the upper face and the lower face of the cartridge main body 3, by bending a thin metal plate or an engineering plastic plate into a II -like shape. That is, the sliding shutter 7 comprises the upper and lower shutter blades 32, 33 which extend for covering enough the from a coupling piece 31 in the form of bending the plate.

The coupling piece 31 of the sliding shutter 7 is provided with engaging slits 34, 34 for being engaged with the engaging pin 41 (see FIGURE 1) of the shutter drive member 40, on positions facing the spring hooks 17, 17 provided to the cartridge main body 3 for use of locking when the sliding shutter 7 is in the position covering the openings 5, 6. These engaging slits 34, 34 are provided so as to the free ends of the spring hooks 17, 17 in the course of assembling the sliding shutter 7 to the cartridge main body 3. Here, the reason why that the two pairs of the spring hook 17 and the engaging slit 34 are provided on both sides in reference to the center of the the cartridge main body 3 is that, for instance the pair of the spring hook 17 and the engaging slit 34 on the right side is used for recording and/or reproducing information to or from one surface (A) of the disc 4, while the other pair of the spring hook 17 and the engaging slit 34 on the left side is used for recording and/or reproducing information to or from the other surface (B) of the disc 4. Another reason is to have a flexibility in designing the recording/reproducing apparatus so as that the sliding shutter can slide in either direction for be to with a flexibility of sliding directions for the sliding shutter 7 for recording and/or reproducing information to or from one surface, e.g., the surface (A) of the disc 4.

Further, the coupling piece 31 is provided with engaging hooks 35, 35 on both side of its inner surface in integral with the coupling piece 31. These engaging blades 35, 35 extend in parallel with the surfaces of their corresponding shutter blades 32, 33 between thereof.

When the sliding shutter 7 is inserted into the cartridge main body 3 which rotatably accommodates the disc 4 between the upper case-half 1 and the lower case-half 2, from the front of the openings 5, 6, hook portions made on the tip ends of the engaging hooks 35, 35 are engaged with the bank 16b which defines the guide grooves 16, 16 of the lower case-half 2, simultaneously with the insertion of the stepdown portions on the tip ends of the shutter blades 32, 33 into the engaging hooks 19, 19. When the sliding shutter 7 is in the position covering the openings 5, 6 at this point, the engaging blades 17, 17 of the upper case-half 1 engage with the engaging slits 34, 34 so as to block or lock the slide of the sliding shutter 7. This locking state can be released by depressing to resiliently deform one of the spring hook 17 toward the rear end of the openings 5, 6 using the engaging pin 41 of the shutter drive member 40 (see FIGURE 1).

Further, fiducial pits 51, 51 for defining the position of the disc cartridge 10 in loading into the recording/reproducing apparatus are provided in an area given by the side-walls 11 on both rear corners oppositing the front end of the lower case-half 2 where the sliding shutter 7 is to be applied. When the disc cartridge 10 is loaded into the recording/reproducing apparatus, the disc cartridge 10 is defined its horizontal position by positioning pins of the disc cartridge 10 being engaged with the fiducial pits 51, 51. Furthermore the disc cartridge 10 is also provided a pair of positioning pins for defining the vertical position of the disc cartridge 10 by supporting the main surfaces of the disc cartridge 10.

Thus the disc cartridge 10 as shown in FIGURE 1 is resulted by combining the upper case-half 1 and the lower case-half 2 in rotatably accommodating the disc 4 therebetween.

FIGURE 1 shows the disc cartridge apparatus comprised of the disc cartridge 10 and the shutter drive member 40.

In FIGURE 1 the shutter drive member 40 comprises a revolving lever slightly bent like the L letter shape. Its base end is rotatably pivoted on a loading chassis of the recording/reproducing apparatus by a rotary shaft 42, while on its free end the engaging pin 41 to be engaged into the engaging grooves 34, 34 of the sliding shutter 7 is perpendicularly mounted thereto. The shutter drive member 40 is then biased to swing in the direction of the arrow R by a spring 43, while a rotation restricting member 44 for defining the rotating angle of the shutter drive member 40 is projected in the recording/reproducing apparatus in the neighbor of the base end of the shutter drive member 40.

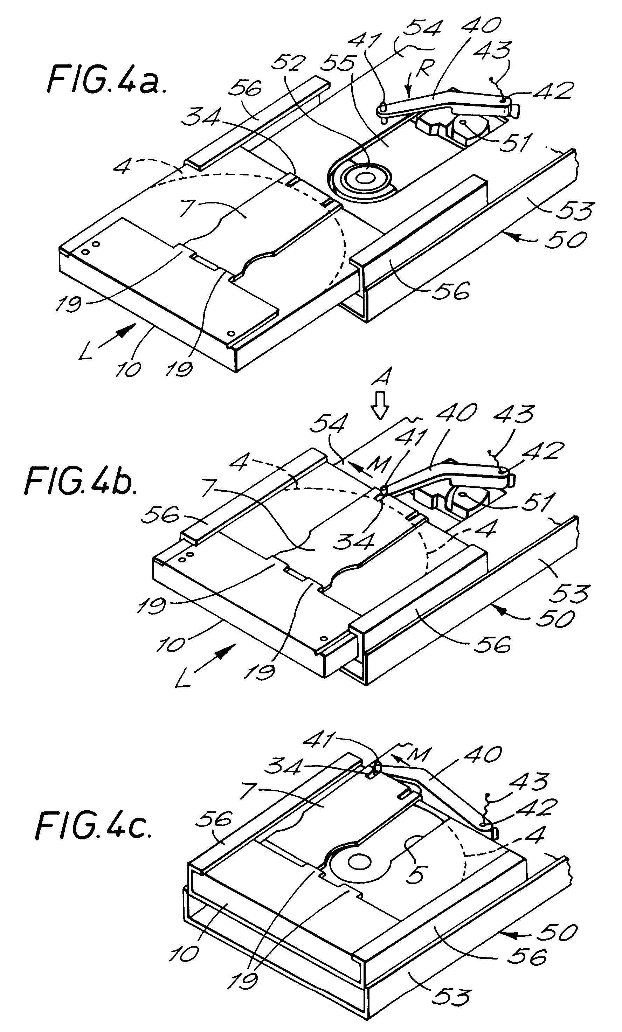

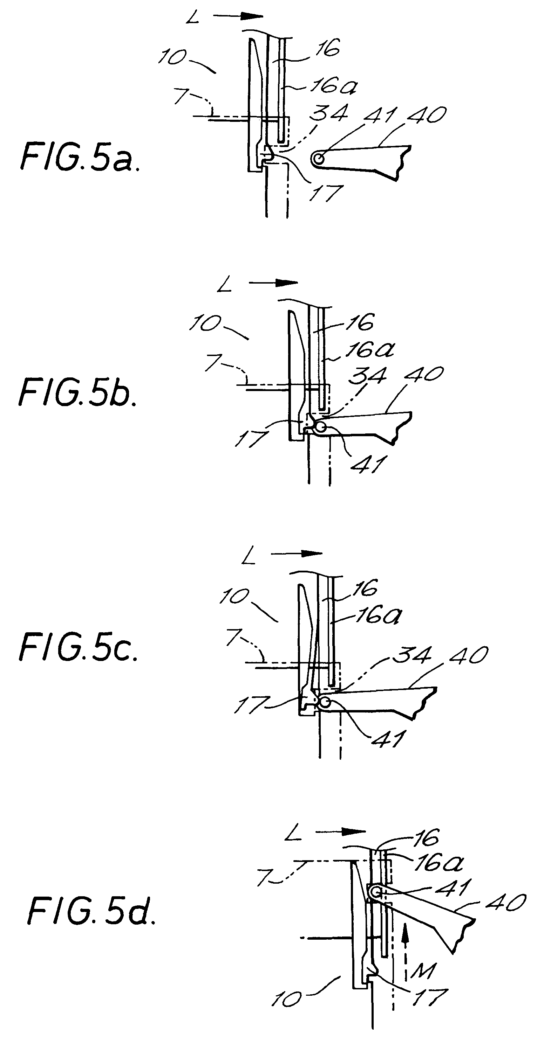

Now, the operation of the disc cartridge apparatus of FIGURE 1 will be explained in reference to FIGURES 4 and 5.

FIGURES 4a to 4c show the process of loading the disc cartridge into the recording/reproducing apparatus in perspective vies. FIGURES 5a to 5d show process of the drive operation of the sliding shutter in the loading process.

A recording/reproducing apparatus 50, as shown in FIGURES 4a to 4c, comprises an optical pickup 51, a disc driving apparatus 52, a case proper 53 accommodating a recording/reproducing circuit, and a loading chassis 54 provided on the case proper 53 for loading the disc cartridge 10. On the loading chassis 54, an opening 55 for exposing the optical pickup 51 and the disc driving apparatus 52 is defined, while loading guides 56, 56 for guiding the disc cartridge 10 are projected therefrom. The opening 55 is defined in a position so as to face the openings 5, 6 of the cartridge main body 3. The lever-shaped shutter drive member 40 is rotatably pivoted on the rear portion of the loading chassis 54 by the rotary shaft 42 and then biased in the direction as indicated by the arrow R but limited its rotating range as mentioned before. The loading chassis 54 shown in the drawings is located on a vertical drive mechanism (not shown) so that it is movable in the vertical direction, but not movable in the horizontal direction. Thus loading chassis 54 can operate to guide in the downward direction the disc cartridge 10 carried in the horizontal direction to a given position as as that the disc cartridge 10 is placed on the disc drive apparatus 52.

As shown in FIGURE 41, the cartridge 10 a rotatably accommodating the disc 4 in the cartridge main body 3 is inserted in the direction as indicated by an arrow L along the loading guides 56, 56 provided on the cassette loading chassis 54. At this time, the engaging slit 34 of the sliding shutter 7 and the engaging pin 41 of the shutter drive member 40 are related to position on the same line in relation to the inserting direction.

Then, when disc cartridge 10 is inserted further in the direction as indicated by the arrow L, the engaging pin 41 of the shutter drive member 40 is fitted in the engaging slit 34 of the sliding shutter 7, as shown in FIGURE 4b. In this state the engaging pin 41 of the shutter drive member 40 bumps against a protrusion from the spring hook 17 of the upper case-half 1 present in the engaging slit 34 of the sliding shutter 7 so as to depress the spring hook 17 for releasing spring hook 17 from its locked state with the inner surface of the engaging slit 34 and thus allow the sliding shutter 7 to slide in the direction as indicated by an arrow M which is perpendicular to the direction of the arrow L.

When the disc cartridge 10 is inserted furthermore in the direction as indicated by the arrow L, the sliding shutter 7 in engage with the engaging pin 41 also slides more in the direction as indicated by the arrow M so as that the opening 5 and the corresponding opening 6 on the side of the optical pickup 51 are fully uncovered, since the engaging pin 41 on the tip end of the shutter drive member 40 moves in the direction of the arrow M along the guide groove 16 of the lower case-half 2. In this state, the disc cartridge 10 is located on the loading chassis 54. After that the disc cartridge 10 is lowered to the recording/reproducing position by the vertical drive mechanism. Thus the loading operation of the disc cartridge 10 is completed.

The drive action of the sliding shutter 7 in the loading operation will be explained in detail in reference to FIGURES 5a to 5d. In FIGURES 5a to 5d a portion viewed in the direction as indicated by an arrow A in FIGURE 4b is illustrated.

FIGURE 5a shows a process in which the disc cartridge 10 moves in the direction of the arrow L (loading direction). In this process the the engaging slit 34 of the sliding shutter 7 installed in the cartridge main body 3 and the each other. In this state, the inner surface of the sliding shutter 7 is engaged with the spring hook 17.

FIGURE 5b shows the state that the disc cartridge 10 has moved furthermore in the direction of the arrow L and thus the engaging pin 41 of the shutter drive member 40 engages with the engaging slit 34 of the sliding shutter 7. In this state the engaging pin 41 bumps against the protrusion of the spring hook 17.

FIGURE 5c shows the state that the disc cartridge 10 has moved furthermore in the direction of the arrow L and thus the protrusion of the spring hook 17 is depressed by the engaging pin 41. In this state, the sliding shutter 7 is unlocked by disengagement of the spring hook 17 from the inner surface of the engaging slit 34.

FIGURE 5d shows the state that the disc cartridge 10 has moved furthermore in the direction of the arrow L. In this state the sliding shutter 7 is unlocked its engagement with the spring hook 17 as mentioned above. Also the engaging pin 41 of the shutter drive member 40 moves in the direction of the arrow M along the guide groove 16 in engaging with the engaging slit 34 of the sliding shutter 7 (the state of FIGURE 5d corresponds to the state as shown in FIGURE 4c). Accordingly the sliding shutter 7 also moves in the direction of the arrow M so as to uncover the openings 5, 6 of the cartridge main body 3.

In the state that the openings 5, 6 are uncovered, when the disc cartridge 10 is pulled in the direction against the arrow L for unloading the disc cartridge 10, the engaging pin 41 of the shutter drive member 40 moves in the direction opposite to the loading direction against the arrow L by being guided by the guide groove 16. Thus the unloading process advances in the order of the states of FIGURES 5c, 5b, 5a in contrary to the above-mentioned. And then the disc cartridge 10 is unloaded after the sliding shutter 7 had moved again its covering position for the openings 5, 6. That is, the guide groove 16 and the engaging pin 17 are disengaged from each other only after the sliding shutter 7 has returned to the covering position so as that the disc cartridge 10 is unloaded from the recording/reproducing apparatus 50. Accordingly there not occurs that the disc cartridge 10 is unloaded from the recording/reproducing apparatus 50 in a state where the sliding shutter 7 is on the half-way between the covering position and the uncovering position for the openings 5, 6. This makes sure to protect the information-bearing surface of the disc 4 in the disc cartridge 3 from the dusts etc.

Further, when the disc cartridge 10 is loaded into the recording/reproducing apparatus 50 at a state that the disc cartridge is reversed upside down, the drive operation of the sliding shutter 7 is performed in the same process as mentioned above. At this time, since the engaging pin 41 projects in both directions from the shutter drive member 40, the engaging pin 41 can easily fit into the engaging slit 34 of the sliding shutter 7.

Further, the optical pickup 51 for recording/reproducing information to or from the disc 4 may be movably mounted so as that it may selectively confront the openings 5, 6. In this case as a matter of course there is no need to reverse the sides of the disc cartridge 10 upside down.

According to the embodiments as described above, it is possible to achieve disc cartridge apparatus which are fully protected from dusts without using particular fastening members like screws or springs in assembling the cartridge main body.

In the above embodiments, the drive operation of the shutter drive member 40, i.e., the engagement of the shutter drive member 40 and the sliding shutter 7 is carried out in the course of that the disc cartridge 10 moves horizontally in the loading process. However the present invention is not limited to such a situation. For example, the drive operation of the shutter drive member 40, i.e., the engagement of the shutter drive member 40 and the sliding shutter 7 can be carried out in the course of that the disc cartridge 10 moves vertically in the loading process.

Further in the above embodiments, the disc 4 is the type of double-sided information disc. However the present invention can be adapted to many types of disc cartridge that accommodates a single-sided information disc, without being limited to the above embodiment. In this case, as a matter of course, only one opening is defined in the proper one of the case-halves, e.g., the upper case-half 1. Also in this case, the sliding shutter 7 can include only one shutter blade in confronting the single opening.

Further in the above embodiments, the sliding shutter 7 is constructed to slide toward both sides of the openings. However the present invention is not limited to such construction. That is, the sliding shutter can be constructed to slide toward only one side of the openings. In this case the openings are uncovered by the slide of the sliding shutter in one direction, while it is covered by the slide of the sliding shutter in the other direction. In this case the locking mechanism for the sliding shutter 7 then comprises one of the spring hooks 17 which is formed on the sliding side and its corresponding one of the engaging slit 34. The unlocking operation in this case is carried out by inserting the engaging pin 41 into the engaging slit 34 so as to deform the spring hook 17, as mentioned above. Then the shutter drive member 40 moves so that the the engaging pin 41 slides the sliding shutter 7 to the position completely uncovering the opening by being guided along the guiding groove 16. While the covering operation is carried out by the movement of the shutter drive member 40 in the opposite direction This situation can be also adapted for such single-sided type information discs and thus to the cartridge with single opening.

The present invention can also be adapted for many applications without departing from the principle of the present invention.

As described above, the present invention can provide the double sided type disc cartridge apparatus which has a relatively small number of components, a simple construction, an accurate shutter driving operation and no fear of being penetrated by dusts in the shutter driving process. And, it never occurs a malfunction that the disc cartridge is unloaded from recording/reproducing apparatus in the state that the shutter is on the half-way between the positions for covering and uncovering openings.

While there have been illustrated and described what are at present considered to be preferred embodiments of the present invention, it will be understood by those skilled in the art that various changes and modifications may be made, and equivalents may be substituted for elements thereof without departing from the true scope of the present invention. In addition, many modifications may be made to adapt a particular situation or material to the teaching of the present invention without departing from the central scope thereof. Therefor, it is intended that the present invention not be limited to the particular embodiment disclosed as the best mode contemplated for carrying out the present invention, but that the present invention includes all embodiments falling within the scope of the appended claims.

The foregoing description and the drawings are regarded by the applicant as including a variety of individually inventive concepts, some of which may lie partially or wholly outside the scope of some or all of the following claims. The fact that the applicant has chosen at the time of filing of the present application to restrict the claimed scope of protection in accordance with the following claims is not to be taken as a disclaimer or alternative inventive concepts that are included in the contents of the application and could be defined by claims differing in scope from the following claims, which different claims may be adopted subsequently during prosecution, for example, for the purposes of a divisional application.

## Claims

1. A disc cartridge apparatus comprising:
a cartridge main body wherein a disc having an information bearing surface is rotatably accommodated, and which is provided with an opening confronted by an optical pickup for recording and/or reproducing an information signal to/from the disc;
a sliding shutter slidably installed in the cartridge main body between a position where it covers the opening of the cartridge main body and another position where it uncovers the opening; and
a releasable locking mechanism having a portion to be engaged defined on the sliding shutter and an engaging portion defined on the cartridge main body for locating the sliding shutter to the position for covering the opening.

2. A disc cartridge apparatus comprising:
a cartridge main body wherein a disc having an information bearing surface is rotatably accommodated, and which is provided with an opening confronted by an optical pickup for recording and/or reproducing an information signal to/from the disc;
a sliding shutter slidably installed in the cartridge main body between a position where it covers the opening of the cartridge main body and positions spaced in one direction and another direction from the covering position, where it uncovers the opening;
a locking mechanism having a first and second portion to be engaged defined on the sliding shutter, a first engaging portion for preventing the slide of the sliding shutter in the first direction in engaged with the first portion to be engaged and a second engaging portion for preventing the slide of the sliding shutter in the second direction in engaged with the second portion to be engaged; and
a shutter drive member for driving the sliding shutter in the uncovering position by disengaging the portion to be engaged and the engaging portion of the locking mechanism as well as driving the sliding shutter from the uncovering position to the covering position.

3. A disc cartridge apparatus comprising:
a cartridge main body wherein a disc having an information bearing surface is rotatably accommodated, and which is provided with an opening confronted by an optical pickup for recording and/or reproducing an information signal to/from the disc;
a sliding shutter slidably installed in the cartridge main body between a position where it covers the opening of the cartridge main body and another position where it uncovers the opening;
a locking mechanism having a portion to be engaged defined on the sliding shutter and an engaging portion defined on the cartridge main body for locating the sliding shutter to the position covering the opening;
a shutter drive member for sliding the sliding shutter in the uncovering position by releasing the lock of the locking mechanism as well as sliding the sliding shutter from the uncovering position to the covering position; and
a guide member formed in the cartridge main body for guiding the shutter drive member in operation of sliding the sliding shutter to the covering position in engage with the shutter drive member.

4. A disc cartridge apparatus comprising:
a cartridge main body wherein a disc having an information bearing surface is rotatably accommodated, and which is provided with an opening confronted by an optical pickup for recording and/or reproducing of an information signal to/from the disc;
a sliding shutter having a shutter blade slidably installed in the cartridge main body between a position where it covers the opening of the cartridge main body and another position where it uncovers the opening;
a locking mechanism having a portion to be engaged defined on the sliding shutter and an engaging portion defined on the cartridge main body for locating the sliding shutter to the position covering the opening;
a shutter blade stopper, having an engaging tab integrally formed on the cartridge main body for slidably supporting the tip end of the shutter blade of the cartridge main body and a slit defined on the cartridge main body in corresponding with the engaging tab so as to be closed by the shutter blade when the sliding shutter covers the opening.

5. A disc cartridge apparatus, comprising:
a cartridge main body which rotatably accommodates a disc having information bearing surfaces, provided with openings where an information signal recording/reproducing pickup faces the information bearing surfaces;
a sliding shutter which has been mounted to the cartridge main body in the freely sliding state between a position where the openings of the cartridge main body are covered and a position where the openings are uncovered both in the one direction and the opposite direction;
a releasable locking mechanism which locates the sliding shutter at the covered position when the shutter is at the position where the openings are covered; and
engaging slits which are provided on the sliding shutter and allow a shutter opening/closing member to enter for unlocking the locking mechanism when the shutter is at the covered position and are positioned at the linearly symmetrical positions on the cartridge main body when the sliding shutter is at the covered position.

6. A disc cartridge apparatus, comprising:
a cartridge main body comprising a first and a second case-halves which are arranged facing each other, accommodating a disc having information bearing surfaces in the rotatable state and are provided with openings where an information signal recording/reproducing pickup faces the information bearing surfaces;
a sliding shutter mounted to the cartridge main body in the rotatable state between the position to cover the opening of the cartridge main body and the position to uncover the opening; and
a releasable locking mechanism comprising a portion to be engaged provided on the sliding shutter and an engaging portion provided at the first case-half of the cartridge main body and locates the sliding shutter at the covered position when the sliding shutter is at the position where the openings are covered.

7. A disc cartridge apparatus, comprising:
a cartridge main body comprising a first and a second case-halves which are arranged facing each other, accommodating a disc having information bearing surfaces, provided with openings where an information signal recording/reproducing pickup faces the information bearing surfaces;
a sliding shutter which is mounted to the cartridge main body in a freely sliding state between a position where the openings of the cartridge main body are covered and a position where the openings are uncovered;
a releasable locking mechanism comprising a portion to be engaged provided on the sliding shutter and an engaging portion provided at the first case-half of the cartridge main body and locates the sliding shutter at the covered position when the sliding shutter is at the position where the openings are covered;
a shutter drive member which unlocks the locking mechanism, drives the sliding shutter to the uncovered position and drives the shutter located at the sliding position to the covered position; and
a guide member which is formed on the second case-half of the cartridge main body and guides the shutter drive member which is engaged with the sliding shutter until the sliding shutter is located at the covering position when the shutter drive member drives the sliding shutter to perform the drive operation of the sliding shutter.

8. A disc cartridge apparatus comprising:
a cartridge main body which rotatably accommodates a disc having information bearing surfaces in the rotatable state and is provided with openings where an information signal recording/reproducing pickup faces the information bearing surfaces;
a sliding shutter which has a coupling piece and a pair of shutter pieces provided facing both side edges of this coupling piece and has been mounted to the cartridge main body in the freely sliding state between a position where the openings of the cartridge main body are covered and a position where the openings are uncovered both in the one direction and its opposite direction;
a releasable locking mechanism which has engaging slits provided on the sliding shutter and a portion to be engaged which is provided on the cartridge main body and engages with the engaging slits when the sliding shutter is at the position where the openings are covered and locates the sliding shutter at the covering position.

9. A disc cartridge apparatus, comprising:
a cartridge main body which rotatably accommodates a disc having information bearing surfaces in the rotatable state and is provided with openings for both surfaces of the disc where an information signal recording/reproducing pickup faces the information bearing surfaces;
a sliding shutter which has a coupling piece and a pair of shutter pieces provided facing both side edges of this coupling pieces and mounted to the cartridge main body in the freely sliding state between a position where the openings of the cartridge main body are covered and a position where the openings are uncovered in both the one direction and its opposite direction;
a releasable locking mechanism which locates the sliding shutter at the covering position when the sliding shutter is at the position where the openings are covered;
engaging slits which are provided to the sliding shutter and allow a shutter drive member to enter for unlocking the locking mechanism when the sliding shutter is at the covering position, and are provided at the linearly symmetrical positions of the cartridge main body when the sliding shutter is at the covering position.

10. A disc cartridge apparatus, comprising:
a cartridge main body which rotatably accommodates a disc having information bearing surfaces and is provided with openings for both surfaces of the disc, where an information signal recording/reproducing pickup faces the information bearing surfaces;
a sliding shutter which has a coupling piece and a pair of shutter pieces provided facing each other at both side edges of the coupling piece and mounted between a position where the openings of the cartridge main body are covered and a position where the openings are uncovered in one direction and its opposite direction; and
a releasable locking mechanism comprising a pair of engaging slits provided on the sliding shutter and a pair of spring hooks integrally formed with the cartridge main body and are engaged with the engaging slits for locating the sliding shutter when the sliding shutter is at a position where the openings are covered, and is so formed that it has engaging surfaces facing each other to hold the sliding shutter in the state engaged with the engaging slits.

11. A disc cartridge apparatus as claimed in Claim 1, further comprises supporting protrusions which are integrally formed with the sliding shutter, and wherein the sliding shutter is mounted to the cartridge main body in the slidable state by the supporting protrusions.

12. A disc cartridge apparatus as claimed in Claim 1, wherein the cartridge main body is comprised of a first and a second case-halves arranged facing each other, and a sliding portion and an engaging portion are provided so that they are engaged by sliding one of the case-halves to the other half horizontally.

13. A disc cartridge apparatus as claimed in Claim 1, wherein the tip of the sliding shutter is formed in a tapered shape which becomes gradually thinner toward the tip and is guided while entering in the groove provided between a guide piece and the cartridge main body.

14. A disc cartridge apparatus as claimed in Claim 3, wherein the shutter drive member is provided at its tip with two pins which project in the opposite directions each other and one of them is used for disengaging the engaging portion and the other is used for engaging with the guide member and guiding it.
